# EUROPEAN PATENT APPLICATION

(11) **EP 4 745 776 A1**
(43) Date of publication of application: **20.05.2026**
(21) Application number: 24306914.3
(22) Date of filing: 15.11.2024
(51) Int. Cl.: G06F 9/54, G06F 40/40, G06N 20/00

(54) **METHOD FOR EXECUTING AT LEAST ONE API CALL TO A SERVER BASED ON A USER INSTRUCTION**

(71) Applicant: Mindflow, 75008 Paris (FR)
(72) Inventor: Yousfi, Saâd, 75005 PARIS (FR); Boualili, Lila, 93190 LIVRY GARGAN (FR); Lallier, Corentin, 33680 LE FORGE (FR); Delhoste, Fabrice, 13850 GREASQUE (FR)
(74) Representative: Plasseraud IP

(57) **Abstract**

A computer-implemented method for executing at least one API call to a server based on a user instruction using at least one machine learning model, comprising:
(i) receiving (S1) said user instruction from a user specifying a requested operation,
(j) using (S2) said machine learning model to identify at least one target function and a corresponding output task instruction, based on the user instruction and features of available functions, said features including, for each available function, a function identifier and a summary of the task performed by said available function,
(k) determining (S3) required arguments of each target function, based on the definition of said target function extracted from a database of definitions of said available functions and based on output task instruction of said target function, using said machine learning model,
(l) executing (S4) the target function based on the definition of said target function and the required arguments, to perform the API call.

## Description

### BACKGROUND OF THE INVENTION

Artificial intelligence (Al) and machine learning (ML) play a significant role in various fields, including natural language processing (NLP). NLP involves the interaction between computers and humans using natural language. It can also be used to enable computer-to-computer interactions by leveraging automatic processing of API descriptions. Machine learning models, such as Large Language Models (LLMs), are a subset of AI that predict the next part of a text based on a given input. These models are used for text generation, translation, and other language-related tasks. LLMs, for example, take a string of characters as input and output the most likely completion based on their training data.

Context in machine learning models refers to the entirety of the input, for example text input, provided to the model to generate a completion. This context includes all the information the model needs to understand and respond to a query accurately. The context is typically measured in tokens, which are units of text that the model processes. Tokens can be as short as one character or as long as one word, depending on the language and the specific tokenization method used by the model.

The context size of a machine learning model, more particularly LLMs, is finite and limited by the model's architecture, which restricts the number of tokens that can be processed in a single input. This limitation affects the number of information that can be included in the context for a given query.

In the field of software engineering, machine learning models may be employed to convert natural language queries into structured data that can be used to trigger actions.

It is known from prior art that existing systems use machine learning models to generate function arguments based on natural language queries. These systems infer the function to call and its argument from the included function definitions and arguments in the context provided to the model. However, the limited context size restricts the number of functions that can be included. This limitation hinders the development of systems that require a large number of functions, such as those for controlling an operating system or performing operations with a cloud provider's API.

There is thus a need for a method to optimize the use of context in machine learning models, allowing for the inclusion of a larger number of functions and their arguments without exceeding the context size limitations.

### SUMMARY OF THE INVENTION

To that aim, the present document proposes a computer-implemented method for executing at least one API call to a server based on a user instruction using at least one machine learning model, comprising:
(a) receiving said user instruction from a user specifying a requested operation,
(b) using said machine learning model to identify at least one target function and a corresponding output task instruction, based on the user instruction and features of available functions, said features including, for each available function, a function identifier and a summary of the task performed by said available function,
(c) determining required arguments of each target function, based on the definition of said target function extracted from a database of definitions of said available functions and based on output task instruction of said target function, using said machine learning model,
(d) executing the target function based on the definition of said target function and the required arguments, to perform the API call.

An API call is a request made by a client to an Application Programming Interface (API) to perform a specific operation or retrieve data from a server. It involves sending a request to a server endpoint, often including parameters or arguments, and receiving a response that contains the requested data or the result of the operation. API calls enable communication between different software systems, allowing them to interact and exchange information programmatically.

The response of an API call provides information about the state of a technical system. This information can include the current status of a task, the result of a requested operation, the status of an external database, or any errors encountered during the execution of the API call, for example.

A machine learning model is a computational algorithm or mathematical model that is trained on a dataset to recognize patterns, make predictions, or perform specific tasks based on input data. It learns from the data by adjusting its parameters to minimize errors and improve accuracy, enabling it to generalize and make informed decisions on new, unseen data.

A user instruction is a command or query provided by a user to a system, typically specifying a desired operation or task to be performed. In the context of the patent application, it refers to the input given by the user, for example a natural language text or recorded audio input, which the system interprets to determine the appropriate function to execute.

Said user instruction may comprise content that either requests a change in a system or seeks information about the current state of a system. For example, a user instruction might specify an operation to update the status of a system, such as marking a task as completed or modifying a record in a database. Alternatively, the user instruction may request information about the system, such as querying the current status of a task, retrieving data from a database, or obtaining the result of a specific operation. These instructions enable the user to interact with the system dynamically, either by making changes to the system's state or by requesting information to understand the system's current condition.

A requested operation is a specific task or action that a user wants to be performed, typically specified through a user instruction. Examples of requested operations that a user might specify in a natural language query include creating a new task, such as "Add a new task to my to-do list called 'Buy groceries'." Users might also request to update a record, retrieving information, deleting an item, search for data, modify settings, fetching a report, controlling a device, sending a message, or scheduling an appointment, for example.

A function identifier is a unique label or code used to distinguish a specific function within a system or a list of available functions. It allows the system to accurately identify and reference the function when executing operations or generating function arguments based on user instructions.

A target function is a specific function identified within a system that is intended to be executed based on a user instruction.

An output task instruction is a directive in natural language, here generated by a machine learning model, that specifies the actions or steps to be performed by a target function based on a user instruction. It serves as a detailed guide for executing the function, including the necessary parameters and the specific task to be accomplished, ensuring that the function operates correctly and efficiently in response to the user's request.

A summary of the task performed by a function is a concise description that outlines the primary action or operation that a specific function is designed to execute. This summary provides an overview of the function's purpose and the main task it accomplishes, helping users or systems understand the function's role and how it can be utilized within a larger process or workflow.

An argument of a function is a variable that is passed to a function when it is called, which the function uses to perform its operations. The number of arguments may vary, depending on the corresponding function. Said number may be equal to zero, one or more than one.

The definition of a function refers to the specification of its body and its parameters. This definition may be provided in a structured format called JSONSchema, which is a specification used to describe the structure and types of JSON data. By using JSONSchema, the parameters and their types are clearly defined, enabling the function to be accurately referenced and called.

A database is an organized collection of structured information or data, typically stored electronically in a computer system. It is managed by a database management system (DBMS) and allows for efficient storage, retrieval, and manipulation of data. Databases are used to store various types of information, such as user data, function definitions, and other relevant details, enabling systems to access and utilize this information for various operations and tasks.

By receiving a user instruction specifying a requested operation, the method allows for a natural language interface, making it easier for users to interact with complex systems without needing to understand the underlying technical details or syntax of API calls.

Determining the function identifier and the output task instruction based on the user instruction and features of available functions using a machine learning model enables the system to dynamically select the appropriate function to execute. This reduces the need for hardcoding specific functions and allows for greater flexibility and scalability in handling various user requests.

Extracting required arguments for each target function from a database of function definitions ensures that the correct parameters are used for each API call. This step leverages the machine learning model to interpret the user instruction and map it to the appropriate function arguments, thereby reducing the likelihood of errors and improving the accuracy of the API calls.

Executing the target function based on its definition and the determined arguments automates the process of performing API calls, which can significantly speed up operations and reduce manual intervention. This automation is particularly beneficial in environments where numerous API calls need to be made in response to user queries, such as in cloud services or operating system management.

The method optimizes the use of context in machine learning models by delegating the generation of function arguments to a separate process. This allows for the inclusion of a larger number of functions and their arguments without exceeding the context size limitations, thereby enabling more complex operations to be performed using natural language queries.

The method may further comprise, after execution of each API call:
(e) retrieving the response of the API call,
(f) returning a confirmation message or an error message, or identifying a new target function and a corresponding output task instruction using said machine learning model, based on the previous API call response, said user instruction and said features of available functions,
(g) determining required arguments of each target function, based on the definition of said target function extracted from the database of definitions of said available functions and based on output task instruction of said target function, using said machine learning model,
(h) executing the target function based on the definition of said target function and the required arguments, to perform another API call.

The response of an API call is the data or information returned by a server after processing a request made by a client to an Application Programming Interface (API). This response typically includes the result of the requested operation or the data retrieved, and it may also contain status codes, error messages, or other relevant information indicating the success or failure of the API call.

A confirmation message is a notification sent to a user indicating that a requested operation has been successfully completed. An error message, on the other hand, is a notification that informs the user of a problem or failure that occurred during the execution of a requested operation, often including details about the nature of the error and possible steps to resolve it.

The steps (e) to (h) can be performed iteratively, allowing the system to handle multiple function executions in a sequential manner. This iterative process continues, repeating steps (e) to (h) as long as there are additional functions to be executed. The system actively and dynamically adjusts to the outcomes of each API call, deciding on the following course of action based on the received responses. The iteration ensures that complex workflows involving multiple function calls are handled efficiently and accurately.

Once all the necessary functions have been executed, the system will return a final confirmation message or an error message, indicating the overall success or failure of the requested operations. This approach ensures that the user is informed of the outcome of their request, providing immediate feedback on the success or failure of the operations performed.

After receiving the final confirmation or error message, the user can continue asking new instructions in natural language. The system is designed to handle these subsequent user instructions by interacting with the relevant APIs, dynamically determining the appropriate functions and arguments needed for each new user instructions.

The response of the API call retrieved in step (e) may be processed using the machine learning model, and the processed response is used in step (f) for returning a confirmation message or an error message, or determining a function identifier of at least one target function and a corresponding prompt for said target function, based on said user instruction, based on said processed response of the API call and based on said features of the list of available functions, using said machine learning model.

By processing the response of the API call using the machine learning model, the method ensures that the returned data is accurately interpreted and utilized for subsequent operations. This processing may involve parsing or extracting specific elements from the response, ensuring that relevant information is identified and used effectively. By accurately interpreting the returned data, the system can dynamically adapt to the results of previous API calls, enhancing its ability to handle complex workflows.

Said machine learning model may be a Large Language Model (LLM).

A large language model (LLM) is a type of computational model designed to perform natural language processing (NLP) tasks, including language generation. Such models may be built using decoder-only transformer architectures, optimized for efficient text generation and processing at scale. They can be fine-tuned for specific applications or guided via prompt engineering.

Prominent examples of LLMs include OpenAI's GPT series (e.g., GPT-3.5, GPT-4, and GPT-4o, used in ChatGPT and Microsoft Copilot), Google's Gemini, Meta's LLaMA models, Anthropic's Claude series, and models from Mistral AI.

The present document also proposes a computer software, comprising instructions to implement at least a part of the method according to any of the preceding claims, when the software is executed by a processor.

The present document also proposes a computer device comprising:
- an input interface to receive a user instruction,
- a memory for storing at least instructions of a computer program,
- a processing unit accessing to the memory for reading the aforesaid instructions and executing the method according to the present document
- an output interface to provide said confirmation message or an error message.

A processing unit designates an electronic component capable of performing electronic or computer calculations for a function. A processing unit can designate any type of processor or electronic component capable of performing digital calculations. For example, a processing unit can be an integrated circuit, an ASIC (from the English acronym "Application-Specific Integrated Circuit", literally in French "integrated circuit specific to an application", a microcontroller, a microprocessor, a Digital Signal Processor (DSP), a processor, a Graphical Processing Unit (GPU). A processing unit according to the invention is not limited to a particular type of calculation architecture.

A "memory" designates a digital electronic device or digital electronic device component used to store data. Different types of memories can be used in the present disclosure, such as random access memory (RAM), volatile memory or flash memory. A computer device according to the invention can be equipped with one or more non-volatile memories which can be of different types such as mass memories, flash memory, read only memories or SSD memories. A computer device according to the invention may also comprise one or more random access memories such as RAM, DRAM, SRAM, DPRREAM, VRAM, eDRAM or 1T-SRAM.

The input interface may comprise a keyboard, a mouse, a touchscreen, a voice recognition system, a microphone, or a gesture recognition system.

The output interface may comprise a display, a speaker, a printer, or a haptic feedback device.

In yet another aspect of the present disclosure, it is proposed a non-transitory computer-readable medium encoded with executable instructions which, when executed, causes a computer device comprising a processor operatively coupled with a memory, to perform a method as proposed in the present disclosure.

In the context of the present invention, it should be understood that the terms "a," "an," and "at least one" are used interchangeably unless otherwise specified. Specifically, the use of the term "a" or "an" does not limit the invention to a single element but should be interpreted as including the possibility of multiple elements, unless clearly indicated otherwise. Therefore, the term "at least one" also encompasses the situation where only one element is present.

### BRIEF DESCRIPTION OF THE DRAWINGS

Other features, details and advantages will be shown in the following detailed description and on the figures, on which:
- Figure 1 illustrates a computer device according to the present document
- Figure 2 is a flow-chart of an embodiment of the method according to the present document.

### DETAILED DESCRIPTION OF A PREFERRED EMBODIMENT

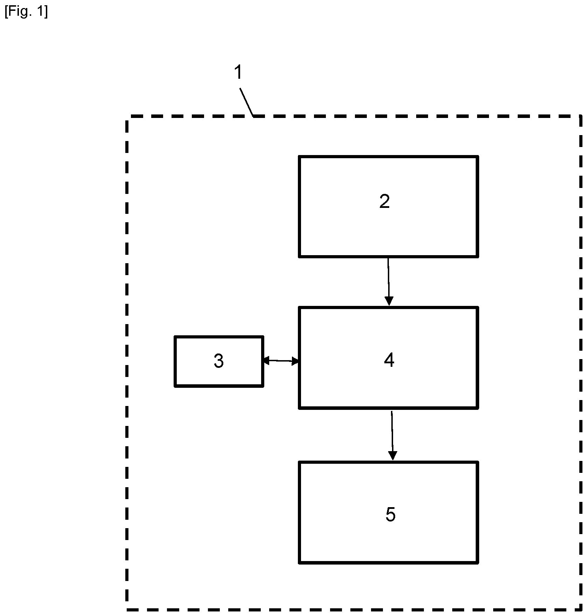

Figure 1 schematically shows an example of a computer device 1 according to the invention. Said computer device comprises:
- an input interface 2 to receive a user instruction,
- a memory 3 for storing at least instructions of a computer program,
- a processor 4 accessing to the memory 3 for reading the aforesaid instructions and executing the method according to the present document,
- an output interface to provide said confirmation message or an error message to a user.

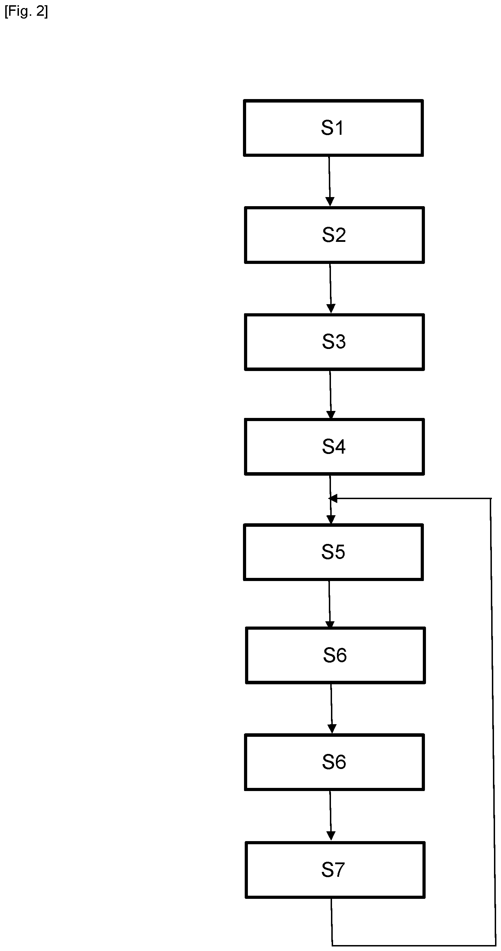

An embodiment of the method according to the present document will now be described with reference to Figure 2. Said method aims to execute at least one API call to a server based on a user instruction using at least one machine learning model.

Said method comprise a step S1 of receiving said user instruction, for example a natural language instruction from a user specifying a requested operation. According to an embodiment, said user instructions may be *"Rename "Buy juice" to "Buy orange juice" and note that it's done."*

Then, in step S2, at least one target function and a corresponding output task instruction are identify using a machine learning model, for example a LLM, based on the user instruction and features of available functions.

Said features include, for each available function, a function identifier and a summary of the task performed by said available function.

For example, the function identifiers and the corresponding summaries may be:
*"create_todo": "Create todo, creates a todo item"*
*"mark_done": "Mark done, Marks the todo with the provided id as done"*
*"mark_undone": "Mark undone, Marks the todo with the provided id as undone"*
*"delete_todo": "Delete todo, Deletes the item with the provided id"*
*"change_label": "Changes the label of the todo item with the provided id"*
*"search_todos": "Search todos, Returns a list of all todos that match the search query"*

In this example, the result of step S2 is the identification of the function *"search_todos"* and the output task instruction *"Search for Buy juice".*

Then, required arguments of each target function is determined (S3), based on the definition of said target function extracted from a database of definitions of said available functions and based on output task instruction of said target function, using said machine learning model.

For example, the definition of the function *"search_todos"* may be:
*"id: search_todos*
*name: Search todos*
*description: Returns a list of all todos that match the search query*
*arguments:*
   *query: the search query (string)"*

In this function *"search_todos",* the required argument is the argument named *"query".*

The output of step S3 is for example the value *"Buy juice"* of said argument *"query".*

Then, in step S4, the target function *"search_todos"* is executed based on the definition of said target function and the required argument *"query",* to perform the API call.

The response of the API call is then retrieved in step S5.

Said response of the API call is for example *{"id": "todo-32", "label": "Buy juice", "done": false}*

Then, in step S6, either a confirmation message or an error message is returned, or a new target function and a corresponding output task instruction are identified using said machine learning model, based on the previous API call response, said user instruction and said features of available functions.

In the above-mentioned example, two new functions to be executed are identified with their respective output task instructions: *"change_label", "Mark todo-32 as done"* and *"mark_done", "set todo-32's label to Buy orange juice".*

The required arguments of each target function *"change_label"* and *"mark_done"* are then determined in step S7, based on the definition of said target functions extracted from the database of definitions of said available functions and based on output task instructions of said target functions, using said machine learning model.

The respective definitions of *"change_label"* and *"mark_done"* may be:
*"id: change_label*
*name: change todo label*
*description: Changes the label of the todo item with the provided id*
*arguments:*
*id: the id of the todo (string)*
*label: the new label to apply (string)"*
   and
*"id: mark_done*
*name: Mark done*
*description: Marks the todo with the provided id as done*
*argument:*
*id: the id of the todo (string)"*

Thus, the required arguments of the function *"change_label"* are *"id"* and *"label"* and the required argument of the function *"mark_done"* is *"id".*

Then, each target function *"change_label"* and *"mark_done"* is executed based on the definition of said target function and said required arguments, to perform another API call(s).

The response of the API call is then retrieved in another step S5.

Said response of the API call is for example *{"id": "todo-32", "label": "Buy juice", "done": false}]* for the execution of the function *"search_todos" and {"id": "todo-32", "label": "Buy juice", "done": true}* for the execution of the function of the function *"mark_done".*

Then, in another step S6, a confirmation message is returned, based on the all the previous API call responses and said user instruction.

Said confirmation message is for example *"Success! The todo's name is now "Buy orange juice" and it's marked as done!"*

Again, after receiving the final confirmation or error message, the user can continue asking new instructions in natural language. The system may be designed to handle these subsequent user instructions by interacting with the relevant APIs, dynamically determining the appropriate functions and arguments needed for each new user instructions.

Alternatively, the response of the API call retrieved in step (e) may be processed using the machine learning model, and the processed response may be used in step (f). This processing may involve parsing or extracting specific elements from the response.

## Claims

1. A computer-implemented method for executing at least one API call to a server based on a user instruction using at least one machine learning model, comprising:
(a) receiving (S1) said user instruction from a user specifying a requested operation,
(b) using (S2) said machine learning model to identify at least one target function and a corresponding output task instruction, based on the user instruction and features of available functions, said features including, for each available function, a function identifier and a summary of the task performed by said available function,
(c) determining (S3) required arguments of each target function, based on the definition of said target function extracted from a database of definitions of said available functions and based on output task instruction of said target function, using said machine learning model,
(d) executing (S4) the target function based on the definition of said target function and the required arguments, to perform the API call.

2. Computer-implemented method according to the preceding claim, wherein said method further comprise, after execution of each API call:
(e) retrieving (S5) the response of the API call,
(f) returning (S6) a confirmation message or an error message, or identifying a new target function and a corresponding output task instruction using said machine learning model, based on the previous API call response, said user instruction and said features of available functions,
(g) determining (S7) the required arguments of each target function, based on the definition of said target function extracted from the database of definitions of said available functions and based on output task instruction of said target function, using said machine learning model,
(h) executing (S8) the target function based on the definition of said target function and the required arguments, to perform another API call.

3. Computer-implemented method according to the preceding claim, wherein determining a function identifier of at least one target function and an output task instruction corresponding to said target function and determining the required arguments of each target function are performed separately by two successive queries to the machine learning model.

4. Computer-implemented method according to any of the preceding claim, wherein the response of the API call retrieved in step (e) is processed using the machine learning model, and the processed response is used in step (f) for returning a confirmation message or an error message, or determining a function identifier of at least one target function and a corresponding prompt for said target function, based on said user instruction, based on said processed response of the API call and based on said features of the list of available functions, using said machine learning model.

5. Computer-implemented method according to any of the preceding claim, wherein the machine learning model is a Large Language Model.

6. A computer software, comprising instructions to implement at least a part of the method according to any of the preceding claims, when the software is executed by a processor.

7. A computer device (1) comprising:
- an input interface (2) to receive a user instruction,
- a memory (3) for storing at least instructions of a computer program,
- a processing unit (4) accessing to the memory (3) for reading the aforesaid instructions and executing the method according to claims 1 to 5,
- an output interface (5) to provide said confirmation message or an error message.
